# DEMANDE DE BREVET EUROPEEN

(11) **EP 1 772 084 A2**
(43) Date de publication de la demande: **11.04.2007**
(21) Numéro de dépôt: 06362001.7
(22) Date de dépôt: 03.10.2006
(51) Int. Cl.: A47J 37/07, F24C 15/20

(54) **Table équipée de moyens de cuisson**

(30) Priorité: 04.10.2005 FR 0510157
(71) Demandeur: Orbea, 85340 Olonne sur Mer (FR)
(72) Inventeur: Maingueneau, Gérard, 85180 Château d'Olonne (FR); Maingueneau, Grégory, 79250 Nueil les Aubiers (FR)
(74) Mandataire: Fantin, Laurent

(57) **Abrégé**

L'objet de l'invention est une table comportant un châssis (14) supportant un plateau (12) dans lequel au niveau duquel sont prévus des moyens de cuisson (16) intégrant une source de chaleur, caractérisée en ce que les moyens de cuisson (16) peuvent pivoter par rapport à un axe (62) sensiblement horizontal relié au châssis (14) de la table, au moins une partie du plateau étant reliée aux moyens de cuisson (16) de manière à pouvoir pivoter par rapport audit châssis.

## Description

La présente invention se rapporte à une table équipée de moyens de cuisson.

Pour obtenir des barbecues plus conviviaux, il existe des tables incorporant au centre des moyens de cuisson. Ainsi, chaque convive peut faire cuire ses aliments sans avoir à se déplacer.

Ces tables dites d'extérieur comprennent un châssis supportant un plateau avec au centre un évidement permettant de loger des moyens de cuisson. Ces derniers comportent une grille ou une plaque de cuisson sur laquelle sont susceptibles d'être disposés les aliments à cuire, et un brûleur à gaz, disposé sous la grille ou la plaque, alimenté par un réservoir de gaz.

Selon les variantes, le châssis peut comprendre des roulettes et des brancards pour déplacer la table. De même, le plateau peut être surmonté d'un autre plateau mobile en rotation en partie centrale afin de rendre les plats placés sur ce plateau mobile accessibles pour tous les convives.

Pour évacuer les fumées produites lors de la cuisson, la partie centrale de la table est surmontée d'une hotte, d'un conduit d'évacuation et d'un extracteur de fumée afin de capter les fumées et de les rejeter en hauteur de manière à ne pas importuner les convives. A cet effet, une structure supérieure est prévue au dessus du plateau de manière à supporter la hotte, le conduit d'évacuation et l'extracteur, cette structure étant reliée au châssis prévu sous le plateau.

Cette architecture conduit à une table relativement lourde, difficile à manoeuvrer et à stocker en période hivernale. Par ailleurs, la structure supérieure disposée au niveau du centre de la table constitue un obstacle pour les convives disposés face à face ce qui tend à réduire l'aspect convivial de la table.

Le document US-4.788.905 propose une structure ne nécessitant pas de hotte pour aspirer la fumée dégagée lors de la cuisson. Cette structure comprend un panneau fixe rapporté sur un châssis roulant. Des moyens de cuisson sont intégrés sous le panneau au niveau d'une première ouverture centrale ménagée au niveau dudit panneau. Une seconde ouverture périphérique entoure la première ouverture centrale, un flux d'air étant propulsé via ladite seconde ouverture périphérique pour canaliser la fumée au-dessus du panneau. Pour obtenir cet écoulement forcé de l'air, on utilise un ventilateur disposé sous les moyens de cuisson, le tout étant disposé dans une enceinte comportant une entrée d'air sous le ventilateur et étant fermée en partie supérieure par le panneau.

Cet agencement conduit à une structure ou table relativement lourde et encombrante dans la mesure où le panneau ne peut pas s'escamoter au moins en partie.

Aussi, la présente invention vise à pallier les inconvénients de l'art antérieur en proposant une table équipée de moyens de cuisson, de conception simple, susceptible d'être relativement compacte.

A cet effet, l'invention a pour objet une table comportant un châssis supportant un plateau au niveau duquel sont prévus des moyens de cuisson intégrant une source de chaleur, caractérisée en ce que les moyens de cuisson peuvent pivoter par rapport à un axe sensiblement horizontal relié au châssis de la table, au moins une partie du plateau étant reliée aux moyens de cuisson de manière à pouvoir pivoter par rapport audit châssis.

D'autres caractéristiques et avantages ressortiront de la description qui va suivre de l'invention, description donnée à titre d'exemple uniquement, en regard des dessins annexés sur lesquels :
- la figure 1 est une coupe verticale d'une variante de table selon l'invention,
- la figure 2 est une demi coupe verticale illustrant les moyens de cuisson de la table,
- la figure 3 est une vue en perspective de dessus illustrant les moyens de cuisson de la table,
- la figure 4 est une vue en perspective de dessous illustrant les moyens de cuisson,
- la figure 5 est une vue de dessus d'un brûleur des moyens de cuisson,
- la figure 6 est une vue partielle en perspective illustrant un détail du brûleur de la figure 5,
- la figure 7 est une vue latérale illustrant en coupe une table comportant une partie escamotable selon une première variante de l'invention,
- la figure 8A est une demi vue de dessus illustrant le châssis de la table de la figure 7 en position déployée,
- la figure 8B est une demi vue de dessus illustrant le châssis de la table de la figure 7 en position repliée,
- la figure 9A est une demi vue de dessus illustrant une autre variante d'un châssis d'une table selon l'invention dans une position déployée,
- la figure 9B est une demi vue de dessus illustrant le châssis de la figure 9A dans une position repliée,
- la figure 10A est une demi vue latérale illustrant une autre variante d'une table selon l'invention dans une position déployée,
- la figure 10B est une demi vue latérale illustrant la variante de la figure 10A dans une position repliée,
- la figure 11A est une demi vue de dessus illustrant la variante de la figure 10A dans une position déployée,
- la figure 11B est une demi vue de dessus illustrant la variante de la figure 10A dans une position repliée,
- la figure 12 est une vue latérale illustrant en coupe une table comportant une partie escamotable selon une autre variante de l'invention,
- la figure 13A est une demi vue de dessus illustrant le châssis de la table de la figure 12 en position déployée, et
- la figure 13B est une demi vue de dessus illustrant le châssis de la table de la figure 12 en position repliée.

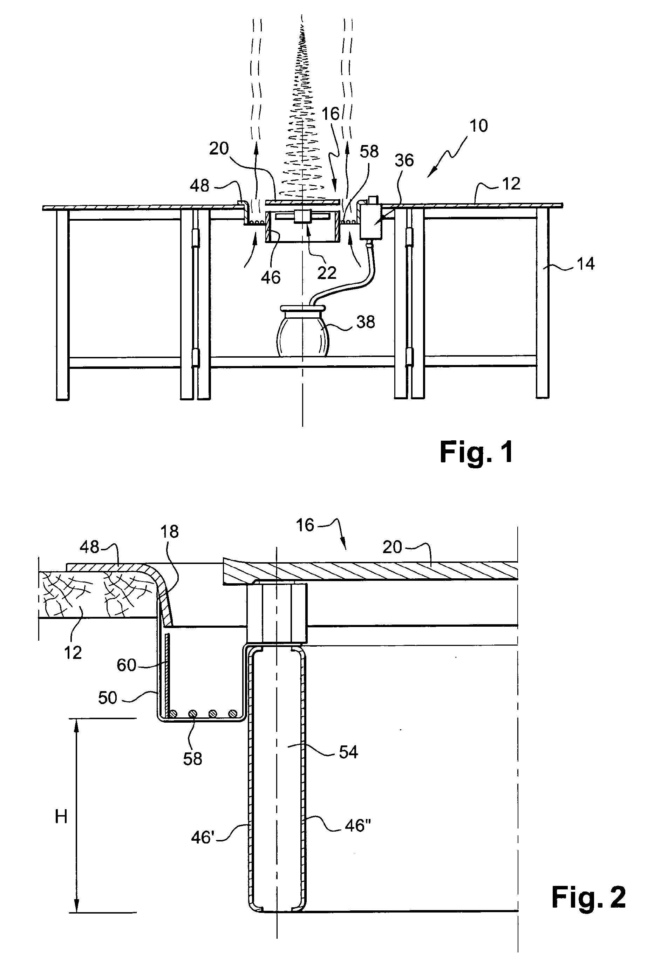

Sur la figure 1, on a représenté en 10 une table comprenant au moins un plateau 12 supporté par un châssis 14 muni de pieds.

Selon un mode de réalisation, le plateau 12 est circulaire et constitué d'un panneau central soutenu par quatre pieds et de deux panneaux latéraux en demi-cercle soutenus chacun par deux pieds. Ces panneaux latéraux sont articulés par rapport au panneau central et leurs pieds sont susceptibles de pivoter et de se ranger sous le panneau central de manière à permettre auxdits panneaux latéraux de se replier. Cette solution permet d'obtenir une table plus compacte facilitant le stockage de ladite table.

Selon les variantes, le plateau 12 peut avoir différentes formes et être carré, rectangulaire, circulaire ou autre. De même, différents matériaux peuvent être envisagés pour réaliser le plateau.

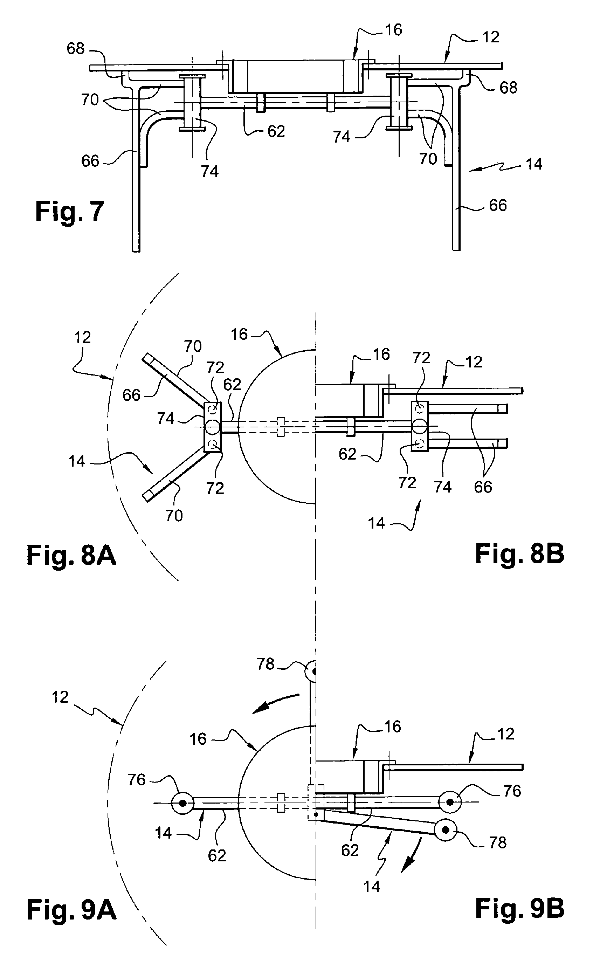

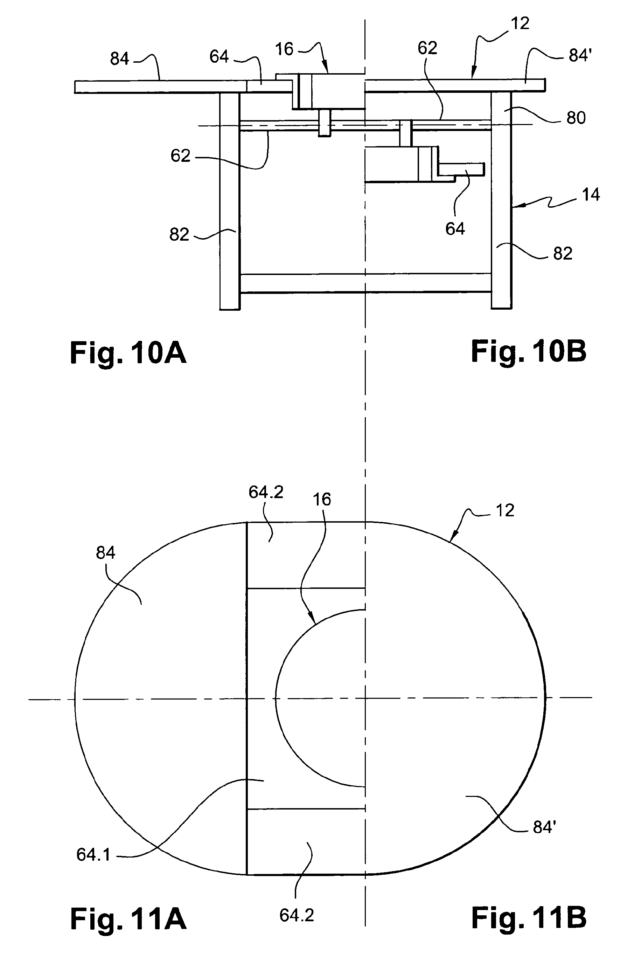

Selon les variantes, le plateau 12 peut être d'un seul tenant comme illustré par exemple sur la figure 7, ou comprendre plusieurs parties comme illustré par exemple sur la figure 11A. Dans ce cas, certaines parties peuvent coulisser dans un plan sensiblement horizontal et au moins une partie du plateau peut s'escamoter sous les parties coulissantes.

Selon les variantes, le châssis 14 peut comprendre des roulettes pour faciliter le déplacement de la table.

Ces différents aménagements ne sont pas plus détaillés car ils sont connus de l'homme du métier.

La table comprend également des moyens de cuisson 16 disposés au niveau d'un évidement 18 ménagé au niveau du plateau 12, de préférence au centre dudit plateau.

Différentes solutions techniques peuvent être envisagées pour la source de chaleur des moyens de cuisson 16. Ainsi, la source de chaleur peut être de type électrique, à gaz, à charbon ou autre.

Selon un mode de réalisation illustré sur les figures, les moyens de cuisson 16 comprennent une grille ou une plaque 20 de cuisson susceptible de supporter les aliments à cuire ainsi qu'un brûleur à gaz 22 placé sous la plaque ou la grille 20.

Selon un mode de réalisation, le brûleur 22 comprend un corps central 24, de section hexagonale par exemple, et au moins une rampe 26, de préférence des rampes 26 rapportées au niveau des faces latérales du corps central 24. Chaque rampe 26 comprend une pluralité de trous 28 rapportés sur sa longueur, de préférence selon une génératrice, par lesquels le gaz est susceptible de s'échapper. Selon une caractéristique de l'invention, le corps central 24 comprend au niveau des faces latérales, entre les rampes 26, des trous 30 par lesquels le gaz est susceptible de s'échapper pour faciliter l'allumage des rampes 26.

Le corps central 24 et les rampes 26 comprennent à l'intérieur des conduits ou des évidements permettant l'écoulement du gaz depuis un conduit d'arrivée 32 relié au corps central jusqu'aux différents trous 28 et 30.

Au moins une bougie d'allumage 34 peut être prévue à proximité d'au moins une rampe 26 pour faciliter l'allumage.

Les moyens de cuisson 16 comprennent de préférence des moyens de contrôle 36 permettant de réguler le débit de gaz, interposés entre un réservoir de gaz 38 et le brûleur 22. Avantageusement, les moyens de contrôle 36 permettent également de contrôler l'allumage de la bougie 34.

Selon un mode de réalisation, les moyens de contrôle 36 se présentent sous la forme d'un boîtier 40 avec au niveau de sa face supérieure un premier bouton 42 pour commander un robinet d'arrivée de gaz et un second bouton 44 pour commander l'allumage de la bougie 34.

Selon une caractéristique de l'invention, la surface supérieure du boîtier 40 des moyens de contrôle est disposée au dessus ou au même niveau que la surface supérieure du plateau 12 de la table.

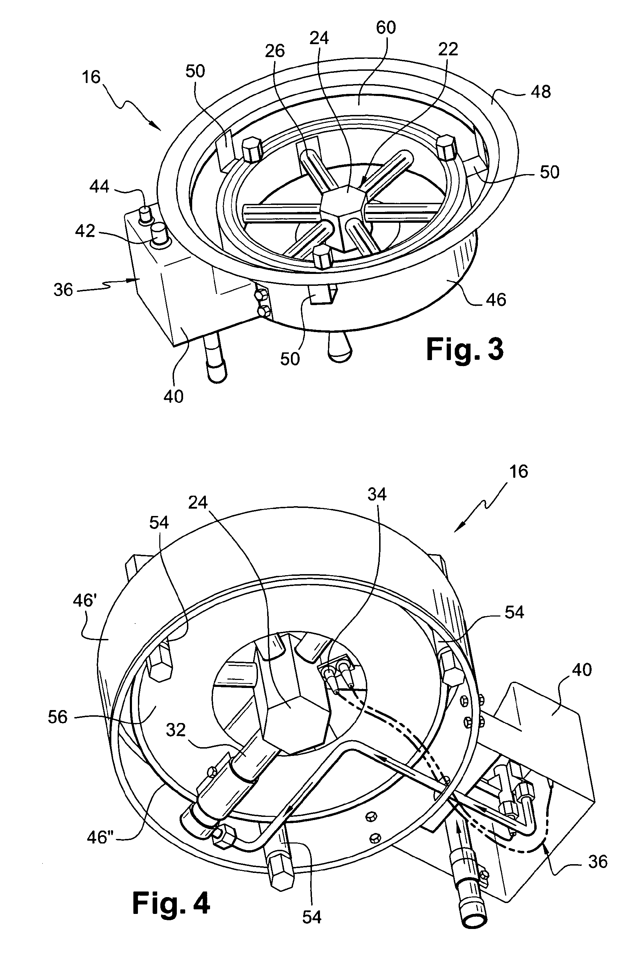

Selon une caractéristique de l'invention, les moyens de cuisson 16 comprennent un cylindre 46 dans lequel est susceptible de se loger le brûleur 22 ainsi qu'une virole 48 susceptible de s'adapter à l'évidement 18 ménagé au niveau du plateau 12 et d'être reliée audit plateau 12, le cylindre 46 et la virole 48 étant reliés par tout moyen approprié, notamment par l'intermédiaire de pattes 50, et ayant des diamètres adaptés pour laisser entre eux un espace de forme sensiblement annulaire. Sur la figure 4, on a représenté les moyens de cuisson sans la virole 48 afin de mieux voir le cylindre 46.

Cet espace annulaire permet de canaliser un écoulement d'air sensiblement froid provenant du dessous de la table, susceptible de canaliser au-dessus de la table l'air chaud et les fumées produits lors de la cuisson afin de les rejeter en hauteur. Cet espace annulaire génère ainsi un conduit fictif.

Selon une caractéristique de l'invention, l'écoulement d'air est produit de manière naturelle en raison des gradients de température et des hauteurs adaptées de la virole 48 et du cylindre 46, comme illustré sur la figure 1. Ainsi, selon l'invention, il n'est pas nécessaire de prévoir des moyens de ventilation pour propulser l'air via l'espace annulaire afin de canaliser les fumées.

La virole présente en partie supérieure une section en forme de cornière. Grâce à ses formes, la virole 48 confère une bonne protection à la table contre la chaleur dégagée par les moyens de cuisson.

Selon un mode de réalisation, le cylindre 46 peut être réalisé à partir de deux cylindres concentriques 46' et 46" entre lesquels sont disposées des colonnes 54. Chaque colonne 54 peut comprendre en partie supérieure un plot sur lequel peut reposer la plaque ou la grille de cuisson 20. Le fait de prévoir deux parois 46', 46" séparées par une lame d'air permet de limiter la diffusion de la chaleur en direction des convives et d'isoler les moyens de cuisson. Par ailleurs, le flux d'air ascendant entre la virole 48 et le cylindre 46 permet de renforcer l'isolation thermique. Enfin le nombre restreint de pattes 50 permet de réduire les phénomènes de pont thermique en direction du plateau. Par ailleurs, le flux d'air ascendant entre la virole 48 et le cylindre 46 contribue à refroidir les pattes 50 et à réduire encore les phénomènes de pont thermique.

Selon un mode de réalisation, le cylindre 46 peut comprendre en partie inférieure une plaque 56 permettant de définir avec les parois latérales du cylindre 46 un logement dans lequel est susceptible d'être disposé le brûleur 22.

Selon un mode de réalisation, comme illustré sur la figure 3, le brûleur 22 peut être relié au cylindre 46 au niveau d'une extrémité d'au moins une rampe 26.

Avantageusement, le boîtier 40 des moyens de contrôle est fixé au cylindre 46, comme illustré sur la figure 4.

Selon une autre caractéristique de l'invention, la virole 48 et le cylindre 46 sont reliés par l'intermédiaire de pattes 50, de préférence par l'intermédiaire de trois pattes 50, en forme de U avec une première branche soudée à la virole et une autre branche avec une extrémité pliée à 90° solidaire d'une colonne 54.

Selon une autre caractéristique de l'invention, une grille 58 avec des formes adaptées à celles de l'espace annulaire entre le cylindre 46 et la virole 48 est prévue, permettant d'éviter la chute des aliments sous la table.

De préférence, cette grille 58 est amovible et repose sur la base du U des pattes 50.

De préférence, cette grille 58 est surmontée au niveau de sa périphérie extérieure d'un bandeau cylindrique 60. Ce bandeau cylindrique 60 permet d'une part de servir de coupe vent transversal afin d'éviter la diffusion de la chaleur en direction des convives, et d'autre part de confiner l'air chaud au niveau des moyens de cuisson 16.

Ce bandeau cylindrique 60 peut venir dans le prolongement de la virole 48 de manière à procurer une meilleure canalisation du flux d'air.

Ce bandeau cylindrique 60 peut être chevauchant ou non avec la partie inférieure de la virole 48. Lorsqu'il est présent la hauteur du conduit délimité par la virole 48 et le bandeau 60 est adaptée à la hauteur du cylindre 46 pour obtenir un flux d'air ascendant de manière naturelle. Avantageusement, la partie terminale inférieure de la virole 48 ou du bandeau cylindrique 60 est décalée vers le haut d'une hauteur H par rapport à la partie terminale inférieure du cylindre 46 pour obtenir un flux ascendant de manière naturelle.

La grille 58 et le bandeau cylindrique 60 sont reliés par tout moyen approprié.

Selon une autre caractéristique de l'invention, les éléments 50 de liaison entre la virole 48 et le cylindre 46 permettent un réglage en hauteur du cylindre 46 par rapport à la virole afin d'ajuster la hauteur de la plaque ou grille de cuisson 20 par rapport au plateau 12 de la table.

En raison de l'absence de moyens pour propulser l'air en dessous du plateau ou de moyens pour aspirer l'air au dessus du plateau, les moyens de cuisson sont de conception simple et relativement peu encombrants permettant à la table ainsi équipée d'être relativement légère par rapport aux tables de l'art antérieur.

Par ailleurs, cette compacité des moyens de cuisson contribue à rendre escamotable au moins une partie du plateau 12.

Selon une caractéristique de l'invention, les moyens de cuisson 16 peuvent pivoter par rapport à un axe 62 sensiblement horizontal relié au châssis 14 de la table, au moins une partie du plateau étant reliée aux moyens de cuisson 16 de manière à pouvoir pivoter par rapport audit châssis.

Selon une première solution illustrée sur les figures 7, 8A, 8B, 9A et 9B, tout le plateau 12 est relié aux moyens 16 de cuisson et peut pivoter par rapport au châssis 14. Selon une autre solution illustrée sur les figures 10A, 10B, 11A et 11B, seulement une partie 64 du plateau 12 est reliée aux moyens de cuisson 16 de manière à pivoter par rapport au châssis 14.

Selon une première variante illustrée sur les figures 7, 8A et 8B, le châssis 14 comprend quatre pieds 66 chacun comportant en partie supérieure une butée 68 contre laquelle est susceptible de prendre appui le plateau 12 et au moins un bras 70 dont l'extrémité libre comprend un axe 72 sensiblement vertical susceptible de pivoter par rapport à un support 74 rapporté à chacune des extrémités de l'axe 62. Ainsi dans une première position déployée illustrée sur les figures 7 et 8A, les quatre pieds sont écartés par rapport à l'axe 62, permettant au plateau 12 d'être en position horizontale en appui contre les butées 68. Dans une autre position repliée illustrée sur la figure 8B, les pieds sont disposés dans le prolongement de l'axe 62. Dans ce cas, le plateau 12 peut pivoter par rapport au châssis grâce aux moyens de cuisson 16 qui pivotent par rapport à l'axe 62, de manière à occuper une position verticale. Cette configuration permet d'escamoter le plateau 12 afin d'obtenir une table très compacte pour le rangement.

En variante, le châssis peut comprendre uniquement trois pieds, deux pivotant à une première extrémité de l'axe 62, le troisième étant disposé dans le prolongement de l'axe 62.

D'autres variantes sont envisageables pour le châssis 14. Selon une autre variante illustrée sur les figures 9A et 9B, l'axe 62 est disposé entre deux pieds 76. Une traverse inférieure permet également de relier ces deux pieds de manière à former avec les pieds 76 et l'axe 62 un cadre. Deux autres pieds 78 sont prévus articulés par rapport à ce cadre. Chaque pied comprend en partie supérieure une butée contre laquelle est susceptible de prendre appui le plateau 12 relié aux moyens de cuisson 16.

Ainsi, dans une première position déployée comme illustrée sur la figure 9A, les pieds sont disposés à 90° et le plateau est en position horizontale en appui contre les pieds 76 et 78. Dans une position repliée illustrée sur la figure 9B, les pieds 78 ont pivoté de manière à venir contre les pieds 76. Dans cette position, le plateau 12 peut pivoter par rapport au châssis par l'intermédiaire des moyens de cuisson 16 qui pivotent autour de l'axe 62, de manière à occuper une position sensiblement verticale. Cette configuration permet d'escamoter le plateau 12 afin d'obtenir une table très compacte pour le rangement.

Selon une autre variante illustrée sur les figures 10A, 10B, 11A et 11B, le châssis 12 comprend un cadre 80 horizontal en partie supérieure supporté par quatre pieds 82, deux parties 84 et 84' du plateau étant susceptibles de coulisser dans un plan sensiblement horizontal par rapport au cadre 80.

Le cadre 80 supporte un axe 62 autour duquel peuvent pivoter les moyens 16 de cuisson. Une rallonge 64 est reliée aux moyens de cuisson 16 et peut occuper deux positions, une première position dans laquelle elle est disposée dans le même plan que les parties coulissantes 84 et 84', comme illustré sur les figures 10A et 11A, et une deuxième position après pivotement autour de l'axe 62 dans laquelle elle est disposée sous les parties coulissantes 84 et 84', comme illustré sur les figures 10B et 11B.

Pour permettre le pivotement de la rallonge 64 autour de l'axe 62 à l'intérieur du cadre 80, ladite rallonge est réalisée en trois parties, une partie centrale 64.1 reliée aux moyens de cuisson 16 et deux parties latérales 64.2 susceptibles de pivoter par rapport aux bords latéraux de la partie centrale 64.1.

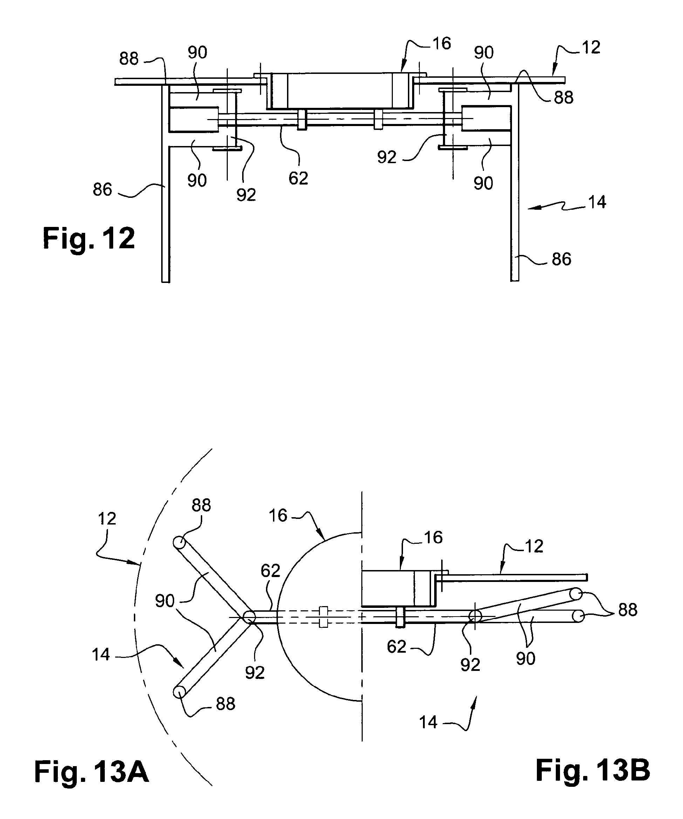

Selon une autre variante illustrée sur les figures 12, 13A et 13B, le châssis 14 comprend quatre pieds 86 chacun comportant en partie supérieure une butée 88 contre laquelle est susceptible de prendre appui le plateau 12 et au moins un bras 90 susceptible de pivoter par rapport à un axe 92 rapporté à chacune des extrémités de l'axe 62. Ainsi dans une première position déployée illustrée sur les figures 12 et 13A, les quatre pieds sont écartés par rapport à l'axe 62, permettant au plateau 12 d'être en position horizontale en appui contre les butées 88. Dans une autre position repliée illustrée sur la figure 13B, les pieds 86 sont disposés sensiblement dans le prolongement de l'axe 62. Dans ce cas, le plateau 12 peut pivoter par rapport au châssis grâce aux moyens de cuisson 16 qui pivotent par rapport à l'axe 62, de manière à occuper une position verticale. Cette configuration permet d'escamoter le plateau 12 afin d'obtenir une table très compacte pour le rangement.

En variante, le châssis peut comprendre uniquement trois pieds, deux pivotant à une première extrémité de l'axe 62, le troisième étant disposé dans le prolongement de l'axe 62.

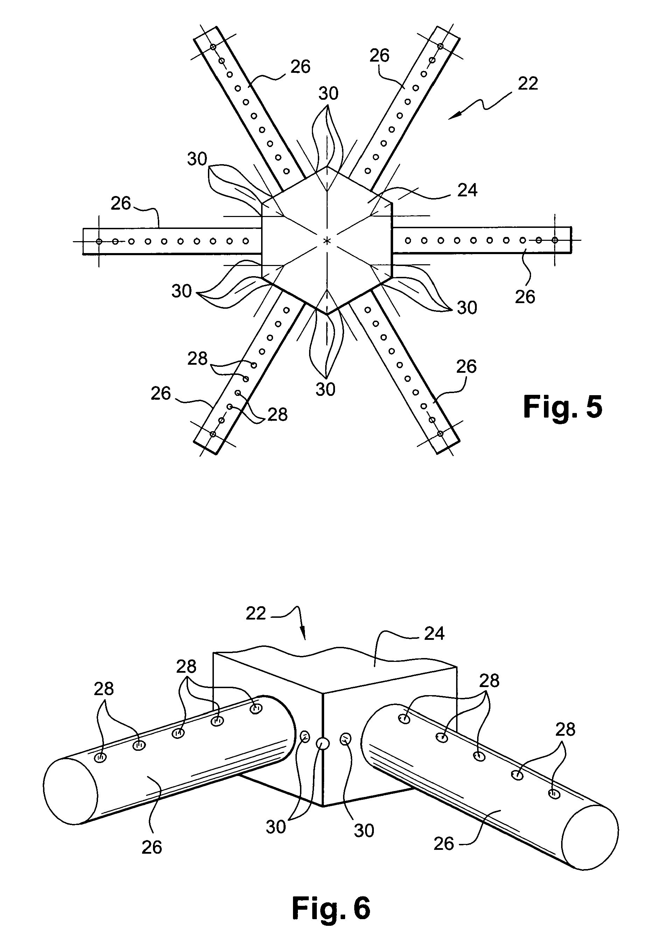

Selon les cas, les variantes illustrées sur les figures 7, 8A, 8B, 9A, 9B, 10A, 10B, 11A, 11B, 12, 13A et 13B peuvent comprendre des moyens de cuisson 16 tels que décrits sur les figures 1 à 6 ou différents sans conduit annulaire entourant la source de chaleur. De même, les moyens de cuisson 16 décrits sur les figures 1 à 6 peuvent être rapportés sur un plateau fixe, non escamotable ou ne comportant aucune partie escamotable.

Bien entendu, l'invention n'est évidemment pas limitée au mode de réalisation représenté et décrit ci-dessus, mais en couvre au contraire toutes les variantes, notamment en ce qui concerne les formes, les dimensions et les matériaux des différents éléments.

## Revendications

1. Table comportant un châssis (14) susceptible de supporter un plateau (12) au niveau duquel sont prévus des moyens de cuisson (16) intégrant une source de chaleur, **caractérisée en ce que** les moyens de cuisson (16) peuvent pivoter par rapport à un axe (62) sensiblement horizontal relié au châssis (14) de la table, au moins une partie du plateau étant reliée aux moyens de cuisson (16) de manière à pouvoir pivoter par rapport audit châssis.

2. Table selon la revendication 1, **caractérisée en ce que** le châssis (14) comprend au moins trois pieds (66) dont au moins deux sont susceptibles de pivoter par rapport à un axe rapporté à au moins une des extrémités de l'axe (62).

3. Table selon la revendication 1, **caractérisée en ce que** le châssis (14) comprend d'une part un cadre formé par l'axe (62), deux pieds (76) et une traverse inférieure, et d'autre part, deux pieds (78) articulés par rapport à ce cadre.

4. Table selon la revendication 1, **caractérisée en ce que** le châssis comprend un cadre (80) horizontal en partie supérieure supporté par des pieds (82), deux parties (84, 84') du plateau étant susceptibles de coulisser dans un plan sensiblement horizontal par rapport au cadre (80) et **en ce que** ledit cadre (80) supporte un axe (62) autour duquel peuvent pivoter les moyens 16 de cuisson auxquels sont reliées une rallonge (64) susceptible d'occuper deux positions, une première position dans laquelle elle est disposée dans le même plan que les parties coulissantes (84, 84'), et une deuxième position après pivotement autour de l'axe (62) dans laquelle elle est disposée sous les parties coulissantes (84, 84').

5. Table selon la revendication 4, **caractérisée en ce que** la rallonge (64) est réalisée en trois parties, une partie centrale (64.1) reliée aux moyens de cuisson (16) et deux parties latérales (64.2) susceptibles de pivoter par rapport aux bords latéraux de la partie centrale (64.1).

6. Table selon l'une quelconque des revendications précédentes, comportant des moyens de cuisson rapportés au niveau d'un évidement (18) ménagé au niveau du plateau (12) et disposés dans un cylindre (46), **caractérisée en ce que** les moyens de cuisson (16) comprennent une virole (48) adaptée à l'évidement (18) ménagé au niveau du plateau (12) reliée par tout moyen approprié au cylindre (46), le cylindre (46) et la virole (48) ayant des diamètres adaptés pour laisser entre eux un espace de forme sensiblement annulaire et des hauteurs respectives adaptées susceptibles de générer un écoulement d'air ascendant naturel provenant du dessous de la table et canalisant au-dessus de la table l'air chaud et les fumées produits lors de la cuisson afin de les rejeter en hauteur.

7. Table selon la revendication 6, **caractérisée en ce que** la virole (48) peut être prolongée en partie inférieure par un bandeau cylindrique (60).

8. Table selon la revendication 6 ou 7, **caractérisée en ce que** la partie terminale inférieure de la virole (48) ou du bandeau cylindrique (60) est décalée vers le haut par rapport à la partie terminale inférieure du cylindre (46).

9. Table selon l'une quelconque des revendications 6 à 8, **caractérisée en ce que** les moyens de cuisson (16) comprennent une grille (58) de forme adaptée à cette de l'espace annulaire entre le cylindre (46) et la virole (48).

10. Table selon l'une quelconque des revendications 6 à 9, **caractérisée en ce que** les éléments de liaison (50) entre la virole (48) et le cylindre (46) autorisent un réglage en hauteur du cylindre (46) par rapport à la virole (48).

11. Table selon l'une quelconque des revendications 6 à 10, **caractérisée en ce que** les moyens de cuisson (16) comprennent des moyens de contrôle (36) intégrés dans un boîtier (40) dont la surface supérieure au niveau de laquelle est placée au moins une commande (42, 44) est disposée au dessus ou au même niveau que la surface supérieure du plateau (12) de la table.
